# EUROPEAN PATENT SPECIFICATION

(11) **EP 3 078 167 B1**
(45) Date of publication and mention of the grant of the patent: **01.11.2017**
(21) Application number: 13799484.4
(22) Date of filing: 02.12.2013
(51) Int. Cl.: H04L 12/40, H04L 29/06, B60R 16/023

(54) **METHOD, SECURE ELEMENT AND SYSTEM FOR MONITORING CONTROLLER AREA NETWORK DEVICES**
VERFAHREN, SICHERES ELEMENT UND SYSTEM ZUR ÜBERWACHUNG VON CAN-VORRICHTUNGEN
PROCÉDÉ, ÉLÉMENT SÉCURISÉ ET SYSTÈME POUR SURVEILLER DES DISPOSITIFS DE RÉSEAU DE MULTIPLEXAGE CAN

(43) Date of publication of application: 12.10.2016
(73) Proprietor: Giesecke+Devrient Mobile Security GmbH, 81677 München (DE)
(72) Inventor: VUPPU, Vidyaranya, 411004 Pune (IN); NAGAMPALLI, Udaikamal, 411004 Pune (IN)
(86) International application number: PCT/EP2013/003635
(87) International publication number: WO 2015/081969

(56) References cited:
- WO-A1-2013/144962
- US-A1- 2008 092 227
- US-A1- 2010 250 053
- US-A1- 2011 093 639
- US-A1- 2012 254 394
- US-B2- 7 519 455

## Description

The invention relates to a method, a secure element and a system for monitoring controller area network devices.

Controller area network, short CAN, -bus is a message-based protocol originally designed for automotive application. A CAN bus is a serial bus standard for connecting electronic control units, hereinafter referred to as controller area network devices to send and/or receive data, such as sensor data, status information and so on.

Nowadays the CAN technology is applied to other technical fields, too, such as aerospace-, medical- and/or industrial automation, e.g. Machine to Machine, short M2M, techniques also known as SCADA or telemetry. M2M refers to a communication technique, wherein devices intercommunicate within a so called Internet of Things, short IOT, to send and/or receive data between different appliances. M2M exists in very different forms and applications, e.g. to streamline products, to monitor systems, to meter characteristic values and/or to relay information to a remote appliance.

Since a CAN bus is a low-level network protocol, no support for any additional functionality e.g. monitoring or controlling devices, authentication, analyzing data traffic, providing higher security, and/or diagnosing failures is incorporated in the CAN technology intrinsically, it is expected that CAN devices deploy their own mechanism to obtain those additional functionalities.

Prior art WO 2013/037996 A1 describes a vehicle providing a secured access to security related data. The security data are incorporated in data storage of a standardized universal integrated chip card, short UICC. The data storage is accessible over a CAN bus via a CAN bus translator. The CAN bus translator therefore converts a CAN message into a single-wire protocol message to access the data storage for storing security related data safely. The UICC is used as a safe data storage only and has no additional functionality. Therefore malfunctions of CAN devices are not discovered therein.

US 2008/0092227 A1 discloses a method and apparatus that provide security for a network-connected vehicle in which a predefined set of permitted operations relating to protected resources can be initiated remotely from elsewhere in the network, while security is maintained for the protected resources by preventing remote initiation of any other operations on a data processing unit which is connected to the protected resources. One of a pair of gateway components runs on each of two data processing units within the vehicle, the first processing unit being connected to the vehicle's device control units and the second processing unit being connected to the external network. The gateway components control the types of communications which can be passed from the network-connected side to the first processing unit such that only permitted operations can be requested and no unauthorized operations can be initiated remotely.

US 7,519,455 B2 discloses a method and a device for a vehicle-related telematics service. The same application protocol is utilized for the telematics service both for the air interface and for the communication in the vehicle and possibly in the service center.

US 2010/0250053 A1 discloses a tachograph and a toll onboard unit as communication partners, which each have a data interface for a data communication via a vehicle data bus to which the communication partners are coupled. The tachograph and/or the toll onboard unit are implemented as a transmitter of data to ascertain a cryptographic check value as a function of user data, which are to be transmitted to the communication partner, and to transmit the cryptographic check value in addition to the user data to the communication partner.

WO 2013/144962 A1 discloses a security system for protecting a vehicle electronic system by selectively intervening in the communications path in order to prevent the arrival of malicious messages at ECUs, in particular at the safety critical ECUs. The security system includes a filter which prevents illegal messages sent by any system or device communicating over a vehicle communications bus from reaching their destination. The filter may, at its discretion according to preconfigured rules, send messages as is, block messages, change the content of the messages, request authentication or limit the rate such messages can be delivered, by buffering the messages and sending them only in preconfigured intervals.

US 2011/0093639 A1 discloses an encrypted encoding and decoding of identification data of CAN bus devices for communications therebetween which provides deterrence of theft and unauthorized access of these secure CAN bus devices. By using a unique encryption code stored in each of the "authorized" CAN bus devices, unauthorized CAN bus nodes will not be able to communicate with the authorized, e.g., secure, CAN bus nodes functioning in a CAN system.

It is an objective of the invention to provide a CAN bus providing a higher robustness, a higher security level than the standard CAN bus and a higher flexibility. The CAN bus should be incorporated easily in existing CAN-bus topologies. It is a further objective of the invention to detect CAN device created events in a tamper-proof environment to deploy appropriate actions and avoid malfunctions or damages.

The above identified objective is solved by a method for monitoring CAN devices according to claim 1. It is further solved by a secure element according to claim 10. It is further solved by a CAN system according to claim 15.

Advantageous embodiments of the invention are described in the respective dependent claims.

The inventive method comprises the following steps: Receiving a controller area network message; converting said controller area network message into a secure element message; and providing said secure element message to a secure element. According to the invention, the method comprises the further step of filtering out, in said secure element, said controller area network message contained in said secure element message in dependence on a registration status of said controller area network message.

The filtering step has the technical effect of reducing the plurality of CAN messages to a smaller amount of CAN messages. The secure element therefore only processes CAN messages which are necessary for monitoring said CAN device. This leads to a CAN bus which is not slowed by processing each CAN message within the secure element.

Since the secure element is only accessible via a dedicated communication channel and optionally via strict access rights, a monitoring of CAN devices is executed within a tamper-proofed appliance. Preferably, the data incorporated in the CAN message are status-, sensor-and/or authentication data of the CAN devices.

A secure element according to the invention is an element reduced in its size and computing performance, since a microcontroller incorporated in said secure element comprises severely limited processing power. Said secure element comprises appropriate additional functionality, such as security features, authentication features, digital signature features, password generation features, secure data storage, monitoring features, failure diagnosis features and/or malfunction prevention features. The secure element is preferably a UICC, such as a smart card, a token storage card and/or a subscriber identification module, short SIM. The term SIM also covers the terms Universal-SIM, CDMA-SIM, Removable User Identity Module, M2M-Identification Module, or equivalent embodiments of a SIM.

In preferred embodiments, the secure element is a SIM, wherein the SIM is configured as a hardware component and arranged as an integrated component. The SIM is either incorporated in a fixed manner to be irremovably connected in the CAN topology, such as a soldered module on a printed circuit board, or incorporated in a removable manner to be exchangeable, such as a standardized form factor SIM Card.

In an alternative embodiment the secure element is a software component such as a trust-worthy part of an operating system kernel in the CAN topology. The secure element is configured as a secure runtime environment for executing programs or applications in a tamper proof runtime environment.

Advantageously, said CAN message comprises either a registered status or a non-registered status as said registration status. Said registered CAN message is processed in said secure element for monitoring said CAN devices. The secure monitoring comprises a diagnosis of a CAN bus system health, a failure detection in case of the occurrence of unexpected registered CAN messages in the secure element, and/or plausibility checking of registered CAN messages. An appropriate intervention in case of specific events on the CAN bus can therefore be obtained to prevent malfunctions on the CAN bus. It is further possible to adapt processes of each CAN device. Since the secure element is an independent unit in the CAN bus topology the CAN bus is secured against fraud attacks.

The registration status is not a part of the CAN message itself. It is either a data base entry of a data base connected to the CAN bus or an independent data set. The data base containing the entries of registered CAN messages is contained in and administrated by the secure element. The secure element is able to add further CAN messages to the list of registered CAN message and/or to remove entries from the list of registered CAN messages. In a preferred embodiment, the data base contains all possible CAN messages transmitted via the CAN bus, wherein the secure element only administrates the registration status of each CAN message. Therefore the CAN bus itself has no influence on the registration status of said CAN message leading to a higher security of said CAN.

The registration status of said CAN messages is switchable from a non-registered status to a registered status by means of said secure element. The secure element therefore obtains a list of CAN messages necessary for monitoring said device. Such a list is obtained from a secure data storage of said secure element or alternatively via an over-the-air, short OTA, instruction set command. The list is available on the CAN for filtering out the registered CAN messages from the transmitted CAN messages.

In a preferred embodiment, said registered CAN messages are provided by said secure element during a registration phase, wherein the monitoring of said registered CAN messages occurs in a monitoring phase. Additionally, the inventive method may comprise an initialization phase, wherein a remote appliance, such as OTA server, provides an instruction set as OTA commands to the secure element. Additionally, the inventive method may comprise an update phase, wherein a remote appliance, such as an OTA server, provides amendments to the instruction set as OTA commands to the secure element. Also during the registration phase, the initialization phase and/or the updating phase, CAN messages may be sent or received by said CAN device since CAN message monitoring is performed on a separate channel from the OTA channel. In particular, it is not necessary to restart the secure element after a registration / initialization and/or update has been performed on the secure element. This gives registration / initialization and/or update an on-the-fly behavior.

In a preferred embodiment said registered CAN message is an authentication message used to authenticate said CAN device to another CAN device or another appliance connected to the CAN bus. A failure in the authentication procedure might result in various sorts of attacks, in case an attacker manages to insert appropriate CAN messages on the CAN bus. Since said registered CAN message is provided to the secure element, said registered CAN message can be further reviewed and tested for plausibility using CAN device specific data sets or information, such as passwords, serial number etc.

Advantageously, the registered CAN message contains a predefined event related to a characteristic of said CAN device. The characteristic of said CAN device is monitored by said secure element. Preferably, said characteristic is a predefined parameter, a sensor output, a password phrase a challenge of a challenge-response authentication and/or some other predetermined value, sent by said CAN device. Said event may consist in or comprise: absence of an expected characteristic, deviation of a characteristic (e.g. sensor output value, entered password phrase etc.) from an expected characteristic (e.g. expected sensor output value, reference password phrase etc.). The secure element e.g. obtains the characteristic in the prescribed manner and compares the characteristic with an expected value of the characteristic. In case of an event, e.g. if received characteristic and expected characteristic differ from each other, the secure element reacts accordingly, e.g. by sending a report message over the CAN bus and/or the mobile radio network; sending a warning message to a dedicated CAN device and/or the CAN bus etc.

Advantageously, a second secure element message is generated by the secure element, wherein the secure element message is converted to a second CAN message and sent over the CAN bus to said CAN device and/or another dedicated CAN device. Therefore an active interaction between the CAN devices and the secure element is obtained, providing a higher security on the CAN bus.

Advantageously, the second secure element message is a response message to said secure element message and/or a proactive command message generated by the secure element to monitor said CAN device. Alternatively, the second secure element message is not a response message, however is generated by said secure element independently of registered CAN messages of said CAN device. Such a second secure element message is preferably generated on basis of a timing scenario and/or a command received via a mobile radio network or an additional wired or wireless communication path.

In a preferred embodiment, the secure element is integrated into a M2M device. The M2M device further comprises a modem unit for establishing a communication via a mobile radio network such as Global System for Mobile Communication, i.e GSM, General Packet Radio Service, i.e. GPRS, Universal Mobile Telecommunications System, i.e. UMTS and/or Long Term Evolution, i.e. LTE.

Preferably, the secure element comprises a message interface unit for establishing a first logical communication channel to the modem unit of the M2M device for sending and receiving secure element messages dedicated to a modem unit of the M2M device. This first logical communication channel is preferably established as a standardized UICC data protocol e.g. standard ISO 7816 or some other appropriate data protocol useful for communication between said secure element and said modem unit of said M2M device.

The M2M-device is further connected to the CAN bus. Said message interface unit of said secure element further establishes a second logic communication channel for sending and receiving secure element messages dedicated to said CAN device. This second logical communication channel is established for providing secure element messages derived from registered CAN messages to said secure element and vice versa. Useful data protocols are the Universal Serial Bus or Single Wire Protocol.

Advantageously the secure element is configured to send and receive secure element messages via the first and/or the second logical communication channel. As a result the secure element is able to send and/or receive secure element messages dedicated to said CAN device for monitoring said CAN device. Furthermore the secure element is able to send and/or receive secure element messages to appliances of the mobile radio network via the modem unit of the M2M device. Advantageously only one existing physical communication channel is used for establishing both logical communication channels. According to an alternative, the secure element has two physical channels, e.g. ISO and USB, and each of the two logical channels is established on a separate physical channel.

Advantageously, the secure element in the M2M-device is an M2M Identification Module, short MIM, and enables the communication of CAN devices with appliances of said radio mobile network. This leads to intelligent metering CAN devices for reporting metering values, such as a smart electric meter, water flow meter etc. It further leads to status reporting CAN devices, wherein said appliances in said radio mobile network obtain the CAN device data in a trust-worthy and tamper-proof environment, secured by said secure element.

Advantageously, the secure element message is of the application protocol data unit type, short APDU. This is a standardized communication for said secure elements. Therefore no adaption is necessary to incorporate such a secure element in said CAN bus topology.

For converting the CAN message to a secure element message an ENVELOPE command is used. Therefore data transmitted via the CAN bus are converted easily into an APDU ENVELOPE command and can be processed by the secure element easily.

Advantageously, the secure element records said secure element messages in said secure element. This is used for logging the CAN bus traffic of registered CAN messages. Alternatively the recorded secure element messages are used for replaying data sequences of registered CAN messages. Both use cases raise the security of a CAN bus.

The invention further relates to a secure element, comprising a message interface and a message processing module. According to the invention, a registration module is configured to register a CAN message as a registered CAN message for monitoring a CAN device. The registration module is further configured to provide the registered CAN message to the CAN bus, wherein the registration status is used for filtering registered CAN messages from non-registered CAN messages.

Preferably, the secure element further comprises the secure element further comprises a bridging unit for converting said secure element message into a controller area network message, wherein said controller area network message is sent and/or received via said interface. Advantageously, the registration module is realized as a secure element applet, written in native or JAVA language. This applet administrates said list of registered CAN messages and provides it to the CAN bus. The applet is configured to amend said list of registered CAN messages according to instruction sets provided by remote appliances or the secure element itself. This leads to a remote administration and configuration of said registered CAN messages.

Preferably, the secure element comprises a data storage unit configured to record said secure element messages originating from a controller network device.

The invention further relates to a CAN system, comprising at least a CAN device, a bridging unit and a secure element. The bridging unit comprises a registration status data base with entries of registered CAN messages, wherein a received CAN message is converted into a secure element message and provided to said secure element if an appropriate entry is contained in the registration status database.

Following embodiments of the invention are described with reference to the figures of the drawings by way of example only. Reference signs are used for the same technical features in different figures. In the drawings:
- Fig. 1: shows a CAN system according to the invention.
- Fig. 2: shows a M2M device according to the invention.
- Fig. 3: shows a block diagram of an inventive secure element.
- Fig. 4: shows a flow diagram of a method for monitoring CAN devices according to the invention.
- Fig. 5: shows an alternative inventive flow diagram.
- Fig. 6: shows an alternative inventive flow diagram.

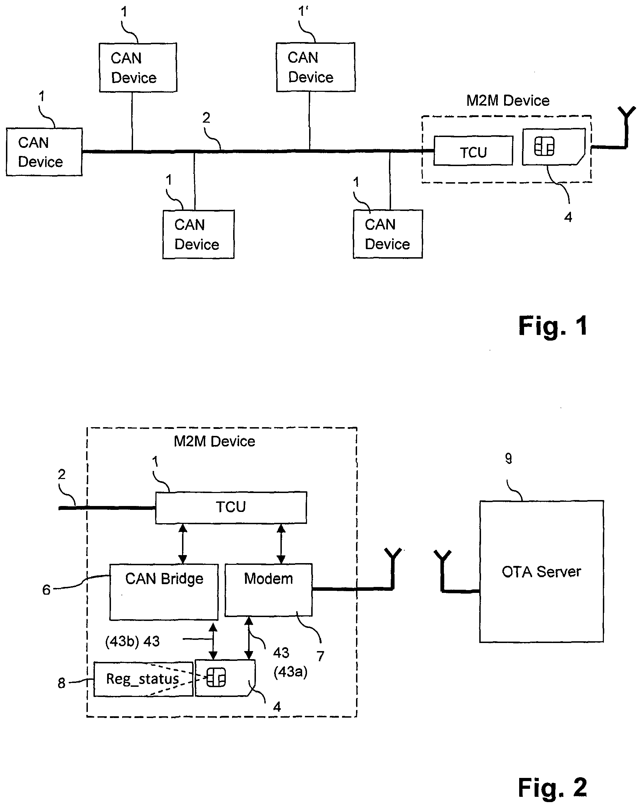

Fig. 1 shows an inventive CAN bus system. CAN devices 1, 1' are connected to a CAN bus 2. According to the invention an M2M device is connected to the CAN bus 2. The M2M device incorporates a secure element 4 and a telecommunication controlling unit TCU. The TCU observes CAN messages 3 transmitted over the CAN bus 2. The secure element is an MIM. The secure element 4 stores a list of registered CAN messages 3 to the M2M device. The list is used filtering out received CAN messages 3 according to a registration status of each respective message 3. More precisely, the list is used for filtering out registered received CAN messages 3 and not filtering out non-registered received CAN messages 3. Therein, all CAN messages 3 are converted to secure element messages 5 and provided to the secure element 4 for monitoring purposes. The secure element 4 uses the list to filter out the registered converted CAN messages and processes only the filtered out,i.e. the registered CAN messages. Non-registered converted CAN messages are discarded by the secure element. In case CAN device 1 communicates with CAN device 1' over CAN bus 2, the secure element 4 monitors said communication.

In Fig. 2 an embodiment of a M2M device according to Fig. 1 is shown in greater detail. The CAN bus 2 is connected to said TCU. The TCU according to Fig. 2 is connected to a bridging unit 6. The bridging unit 6 converts CAN bus messages 3 to secure element messages 5. The secure element 4 further comprises a registration status data base 8. The M2M device according to Fig. 2 further comprises a modem unit 7 for communication with a remote appliance of a mobile radio network. This appliance is an OTA-server 9 configured to receive and send mobile radio messages from the modem unit 7, e.g. an OTA-SMS. The modem unit 7 is connected to the TCU for forwarding said mobile radio messages to said CAN devices 1 containing instructions or request from the OTA server 9 to said CAN devices 1 and vice versa.

The secure element 4 according to Fig. 2 is a SIM. Since the SIM is automatically incorporated into the M2M device, no additional secure element has to be implemented. The SIM is incorporated in a fixed manner within the M2M device via soldering the SIM on a printed circuit board of said M2M device. Alternatively it can be incorporated in a removable manner, if the SIM is a SIM card of one of the standardized form factors.

The SIM comprises an interface unit 41, which physically connects the SIM to the bridging unit 6 and the modem unit 7. The modem unit 7 is coupled to the secure element 4 via a first logical communication channel 43 for sending and receiving secure element messages 5 dedicated to said OTA server 9. The bridging unit 6 is coupled to the secure element 4 via a second logical communication channel 43 for sending and receiving secure element message dedicated to the CAN bus 2. The logical communication channels 43 can be built on the same physical communication channel 42 or alternatively be built on separate physical communication channels 42.

All CAN messages 3 on the CAN bus 2 that are received by the TCU are passed on to the bridging unit 6. The bridging unit 6 is configured to transform CAN messages 3 into ENVELOPE APDUs. At the bridging unit 6, all passed CAN messages 3 are transformed to envelope APDUs and then provided, as envelope APDUs, to the secure element 4 over the second logic communication channel 43. A secure element applet 45 included in said secure element 4 is able to receive those messages 5 from the bridging unit 6. The secure element 4 then filters out the registered transformed CAN messages by means of the secure element 4 located data base 8.

The secure element applet 45 is further able to send a second secure element message 5 to the CAN bus 2 through the bridging unit 6. The secure element applet 45 can further trigger a callback function to run, when the CAN bus 2 transmits a registered CAN message 3. Alternatively the applet 45 attaches the registration status in data base 8 and further interprets registered CAN messages 3 for monitoring purposes. Additionally, the secure element applet 45 is able to record secure element messages 5 for analyzing purposes and/or for replaying purpose.

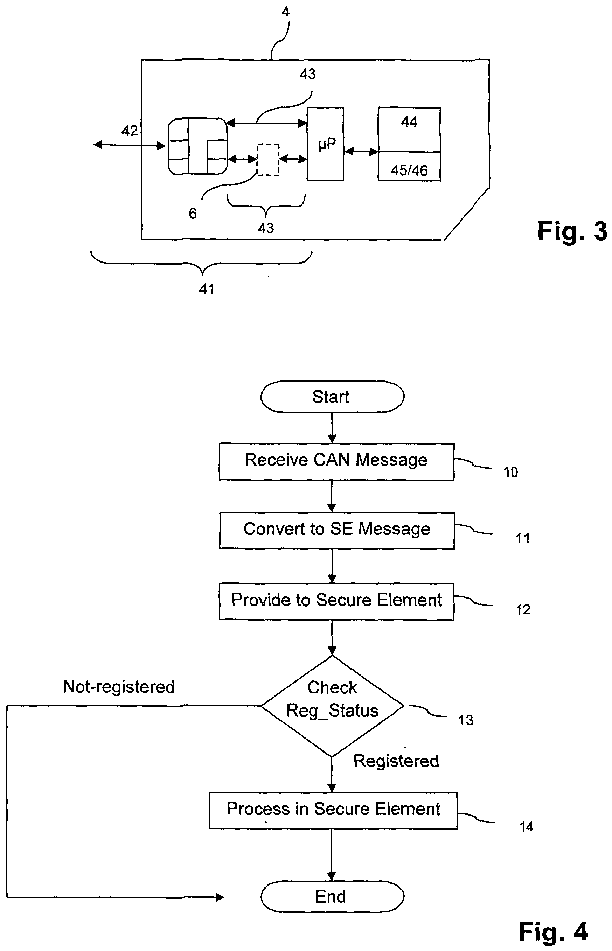

In Fig. 3 an inventive secure element 4 is shown. The secure element 4 comprises a message interface unit 41 which comprises a physical communication channel 42 and two logical communication channels 43, or more precisely 43a, 43b. The logical communication channels 43 can be separated via physical communication channels 42.

The message interface unit 41 provides data to the CAN network 2 and receives messages from the CAN network 2 via a bridging unit 6, which obtains CAN messages 3 and converts registered CAN messages 3 into secure element messages 5 using ENVELOPE APDU commands. The bridging unit 6 can be incorporated into the secure element 4 or in the M2M device according to Fig. 2. The secure element 4 further comprises a processing unit µP and a secure data storage unit 44. The secure element 4 further comprises a filter applet 45 and a registration module 46 for providing registration status to the bridging unit 6 and/or the CAN bus 2.

According to Fig. 3 the bridging unit 6 and the data base 8 might be incorporated in the SIM, wherein the SIM applet 45 manages the filtering of said CAN messages 3 and the conversion of said registered CAN messages 3 into secure element messages 5.

According to Fig. 4 a flow diagram of the inventive method for monitoring CAN modules 1 is illustrated. The method comprises a receiving step 10 for receiving a CAN message. All received messages are converted into secure element messages according to step 11. Afterwards, the converted secure element message is provided to the secure element 4 according to providing step 12. The inventive method further comprises a filtering step 13, wherein a registration status of the provided converted CAN message is verified. In case the provided converted CAN message is a non-registered CAN message, the method ends here. If the provided converted CAN message is a registered CAN message, the secure element 4 processes the secure element message converted CAN message in processing step 14.

The processing step 14 might include the recording of the secure element message. Alternatively or additionally a second secure element message is built as a response to this converted secure element message. This response is transmitted via the CAN bus 2 to a dedicated CAN module 1. A registered CAN message is for instance an authentication message, wherein a CAN device 1 wants to authenticate itself to another CAN device 1' or a service of the OTA-server 9, e.g. for transmitting data to the OTA-server 9 or receive data from the OTA-server 9. To monitor the authentication process by the SIM, all authentication CAN messages are provided to the SIM for verification of the authentication process. This includes a challenge-response interaction between the SIM and the dedicated CAN device 1, wherein a checksum or a random number is compared to prove the correctness of transmission and to preclude any fraud attacks.

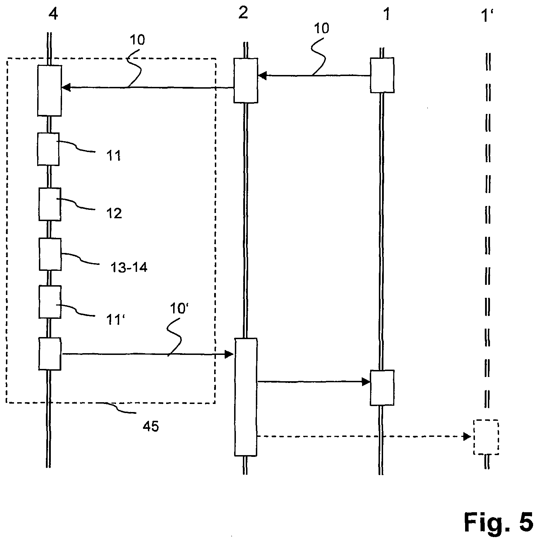

In Fig. 5, an alternative flow diagram of the inventive method is shown. Therein a secure element 4, a CAN network 2, a first CAN devices 1 and a second CAN device 1' are shown. The dotted line in Fig. 4 illustrates a filter applet 45 of the secure element 4 for executing the inventive method. The first CAN device 1 sends a CAN message 3 which is received in the secure element 4. The CAN message 3 is converted into a secure element message 5 in step 11. The secure element message 5 is filtered in a filter step 13 so as to filter the CAN messages 3 contained in the secure element messages 5. Therein, the registration status of each CAN message 3 is checked so as to filter out registered CAN messages 3. Registered CAN messages are filtered out in step 13 and processed in step 14. Afterwards, a second secure element message 5 is built and converted to a second CAN message 3 in step 11'. The second CAN message 3 is sent over the CAN network 2 to the CAN device 1. Additionally or alternatively, the second CAN message 2 is sent to the second CAN device 1', as illustrated in dotted lines.

The secure element message 5 is an application protocol data unit, short APDU, which is a standardized message type for communication with UICCs. The conversion 11 of data incorporated in a CAN message 3 into data incorporated in a secure element message 5 is obtained by an ENVELOPE command. Therefore the CAN messages are transformed into ENVELOPE APDUs and provided to the secure element 4.

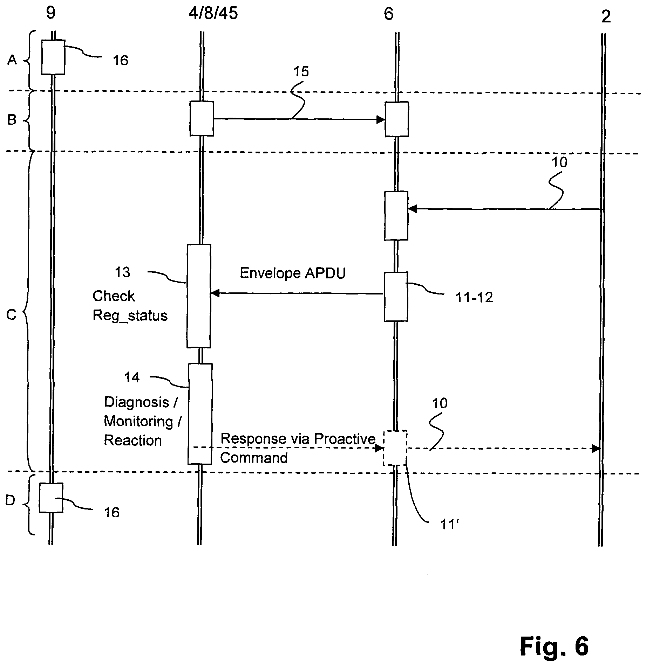

As can be derived from Fig. 5, the filter applet 45 uses a bridging unit 6 incorporated into the secure element 4. Alternatively Fig. 6 shows a flow diagram of an inventive method, where the bridging unit 6 is external to the secure element 4. According to Fig.6 an OTA server 9, a secure element applet 45, a bridging unit 6 and a CAN network 2 are shown. The CAN network 2 connects the CAN devices 1, 1', which is not illustrated.

The flow diagram according to Fig. 6 is divided into four different phases A to D, wherein phases A and D are optional. During Initialization phase A, registration phase B and updating phase C, no CAN message 3 is transmitted over the CAN bus 2 to assure a correct monitoring of the CAN bus 2.

Starting with an initialization phase A the OTA server 9 provides instructions to the secure element applet 45. The instructions obtain a list of CAN messages 3 which should be monitored by the applet 45. Additionally or alternatively, the instructions obtain the identification information or transaction information of a specific CAN device 1, 1' which has to be monitored.

After receiving all instructions in step 16, registration phase B starts. Therein the secure element applet 45 provides lists of registration statuses of CAN messages 3 to the external bridging unit 6. The bridging unit 6 stores the provided list in the date base 8. Alternatively a list of events and/or registered CAN messages 3 are provided to the bridging unit 6. These provided events or CAN messages 3 are parameters for environmental situations e. g. the transmittal of a temperature-, water-, voltage-or vibration value. Alternatively, these events are security related events, such as authentication procedure events or password verification procedure events. Alternatively, these events are events regarding operational parameters of a CAN device 1, e.g. a status report, which might include the status working, the status non-working, the status waiting. As mentioned, an event may imply entry of a value (e.g. authentication value, parameter value ...), absence of an expected value, or the like.

After completion of registration phase B, the monitoring phase C starts. All CAN messages 3 transmitted on the CAN bus 2 are obtained in the bridging unit 6. The bridging unit 6 filters the CAN messages 3 according to the registration status or event provided in the registration phase B in step 13. In case the CAN message 3 is a registered CAN message 3 the bridging unit 6 converts the CAN message into a secure element message 5 in step 11. Therefore ENVELOPE APDUs are used. According to step 14 the APDU is processed in the secure element 4. This includes the diagnosis, the monitoring, the recording, the reacting of said secure element message 5. Optionally, a response is built as a proactive command. This response is a second secure element message 5 and is converted within the bridge unit 6. Afterwards a second CAN message 3 is obtained and sent over the CAN bus 2.

In case the OTA server 9 provides an updated instruction set to the secure element 4, the optional updating phase D starts. Similar to initialization phase A an updated list of CAN messages 3 or identification information or transaction information of a specific CAN device 1, 1' is provided.

During initialization phase B, the secure element 4 will register to the events for which notifications should be received in the secure element 4. The applet 45 in the secure element 4 reacts to the received CAN messages accordingly. The applet 45 can be written in native programming language or in JAVA programming language.

In a first use case the applet 45 assists in CAN bus 2 diagnostics either locally or via instructions from the OTA server 9. Based on the CAN messages 3 received from the CAN network 2, the applet 45 diagnoses the system health and takes timely actions. The diagnostic procedures on the CAN bus 2 and derived actions thereof are exchangeable through the initialization phase A or updating phase B in run time by providing different instruction sets through OTA commands.

In a second use case the applet 45 monitors the CAN bus 2 for disciplined traffic. If malicious activities are detected during processing step 14, the applet 45 immediately takes corrective actions by sending the correct packets over the CAN bus 2.

In a third use case a corrective action for a defective CAN device 1 is deployed using alternative applets which are downloaded via OTA or ignoring faulty CAN messages 3. A first CAN device 1 with a sensor sends a CAN message 3 over the network 2. The CAN device 1' detects the sent message and performs or initiates appropriate action. Assuming the sensor of CAN device 1 is faulty and cannot be replaced immediately, the CAN device 1' should not consider the CAN message 3 from CAN device 1. Via OTA-Server 9 an appropriate instruction set is loaded to the secure element 4 in phase A or D. The secure element registers for this faulty CAN message 3 in bridging unit 6. The CAN message 3 is converted and provided to the secure element 4. Secure element 4 replaces the faulty sensor data with a corrective sensor data in processing step 14 and provides this to the CAN bus 2 for restoring the default behavior of CAN device 1'.

Other use cases are authentication observation and attack prevention. Other use cases are not excluded.

The invention is defined by the appended claims.

## Claims

1. A method for monitoring controller area network devices (1), the method comprising following steps:
- Receiving (10) a controller area network message (3);
- Converting (11) said controller area network message (3) into a secure element message (5); and
- Providing (12) said secure element message (5) to a secure element (4);
**characterized in that:**
- said controller area network message (3) is received from a controller area network device (1) to be monitored and is transmitted over a controller area network bus (2); and
- said controller area network message (3) is filtered out (13) in dependence on a registration status of said controller area network message (3).

2. The method according to claim 1, wherein:
- said controller area network message (3) comprises one of a registered status and a non-registered status as said registration status; and
- said registered controller area network message is processed (14) in said secure element (4) for monitoring said controller area network devices (1).

3. The method according to claim 1 or 2, wherein the registration status is provided by said secure element (4) and wherein said registered controller area network message contains a predefined event defining a characteristic of said controller area network device (1) and observed by said secure element (4).

4. The method according to one of the preceding claims, wherein a second secure element message is generated by said secure element (4), wherein the second secure element message is converted to a second controller area network message and sent (10) over the controller area network (2) to a dedicated controller area network device (1).

5. The method according to claim 4, wherein the second secure element message is a response message to said secure element message (5) and/or a proactive command message generated by the secure element (4) to monitor said controller area network device (1).

6. The method according to one of the preceding claims, wherein said secure element (4) is integrated into a machine to machine device, wherein said secure element (4) comprises an interface (41) for establishing:
- a first logical communication channel (43a) for sending and receiving secure element messages (5) dedicated to a modem unit (7) of a machine to machine device; and
- a second logical communication channel (43b) for sending and receiving secure element messages (5) dedicated to the controller area network devices (1).

7. The method according to one of the preceding claims, wherein said secure element message (5) is an application protocol data unit (APDU) and wherein the controller area network message (3) is converted (11) by an envelope command.

8. The method according to one of the preceding claims, wherein said registration status of said controller area network message (3) is switchable from a not-registered status to a registered status.

9. The method according to one of the preceding claims, wherein said secure element message (5) is recorded in said secure element (4).

10. Secure element (4) comprising:
- an interface (41) configured to send and/or receive (10) a secure element message (5); and
- a processing module (µP) configured to process (14) said secure element message (5);
**characterized in that**:
said secure element message (5) is converted from a controller area network message (3) that is received from a controller area network device (1) to be monitored and is transmitted over a controller area network bus (2);
the secure element (4) further comprises a registration module (46) configured to:
- register (15) a controller area network message (3) as a registered controller area network message for monitoring a controller area network device (1);
and
- provide the registered controller area network message to the controller area device (1) via a controller area network (2), wherein the registration status is used for filtering out registered controller area network messages from non-registered controller area network messages.

11. Secure element according to claim 10, further comprising a bridging unit (6) for converting said secure element message (5) into the controller area network message (3), wherein said controller area network message (3) is sent and/or received (10) via said interface (41).

12. Secure element according to claim 10 or 11, wherein the registration module (46) is realized as a secure element applet (45), wherein the applet (45) is preferably configurable and updateable with over the air, OTA, commands by an OTA server (9).

13. Secure element according to any one of claims 10 to 12, wherein the secure element (4) further comprises a data storage unit (44) configured to record said secure element messages (5) originating from a controller network device (1).

14. Secure element according to any one of claims 10 to 13, wherein the interface (41) is configured to establish:
- a first logical communication channel (43a) configured to send and receive secure element messages (5) dedicated to a modem unit (7) of a machine to machine device on a first physical communication channel (42a); and
- a second logical communication channel (43b) configured to send and receive secure element messages (5) dedicated to a controller area network (2) on the first physical communication channel (42a) or a second physical communication channel (42b).

15. A controller area network system comprising:
- at least a controller area network device (1) configured to send and/or receive (10) a controller area network message (3);
- a bridging unit (6) configured to convert (11) said controller area network message (3) into a secure element message (5); and
- a secure element (4) configured to receive (12) said secure element message (5); **characterized in that**,
said controller area network message (3) is received from a controller area network device (1) to be monitored and transmitted over a controller area network bus (2); and
- the secure element (4) comprises a registration status database (8) with entries of registered controller area network messages, wherein the received controller area network message (3) is filtered (13) by verification if an appropriate entry is contained in the registration status database (8), and is converted into said secure element message (5) and provided to said secure element (4) if an appropriate entry is contained in the registration status database (8).

## Patentansprüche

1. Verfahren zum Überwachen von Steuergerätenetzeinrichtungen (1), das Verfahren umfassend die folgenden Schritte:
- Empfangen (10) einer Steuergerätenetznachricht (3);
- Konvertieren (11) der Steuergerätenetznachricht (3) in eine Sicherheitselementnachricht (5); und
- Bereitstellen (12) der Sicherheitselementnachricht (5) an ein Sicherheitselement (4);
**gekennzeichnet dadurch, dass**:
- die Steuergerätenetznachricht (3) von einer Steuergerätenetzeinrichtung (1), welche überwacht wird, empfangen wird und mittels eines Steuergerätenetzbusses (2) übermittelt wird;
und
- die Steuergerätenetznachricht (3) in Abhängigkeit eines Registrierungsstatus der Steuergerätenetznachricht (3) herausgefiltert (13) wird.

2. Verfahren gemäß Anspruch 1, wobei:
- die Steuergerätenetznachricht (3) einen registrierten Status oder einen nicht registrierten Status als den Registrierungsstatusumfasst:, und
- die registrierte Steuergerätenetznachricht (3) in dem Sicherheitselement (4) zum Überwachen der Steuergerätenetzeinrichtungen (1) verarbeitet wird.

3. Verfahren gemäß einem der Ansprüche 1 oder 2, wobei der Registrierungsstatus von dem Sicherheitselement (4) bereitgestellt wird und wobei die registrierte Steuergerätenetznachricht (3) ein vordefiniertes Ereignis aufweist, welches ein Charakteristikum der Steuergerätenetzeinrichtung (1) definiert und von dem Sicherheitselement (4) überwacht wird.

4. Verfahren nach einem der vorangegangenen Ansprüche, wobei eine zweite Sicherheitselementnachricht von dem Sicherheitselement (4) generiert wird, wobei die zweite Sicherheitselementnachricht in eine zweite Steuergerätenetznachricht konvertiert wird und über das Steuergerätenetz (2) an eine dedizierte Steuergerätenetzeinrichtung (1) gesendet (10) wird.

5. Verfahren gemäß Anspruch 4, wobei die zweite Sicherheitselementnachricht eine Antwortnachricht auf die Sicherheitselementnachricht (5) ist und/oder eine proaktive Befehlnachricht ist, generiert von dem Sicherheitselement (4) zum Überwachen der Steuergerätenetzeinrichtung (1).

6. Verfahren gemäß einem der vorangegangenen Patentansprüche, wobei das Sicherheitselement (4) in eine Maschine-zu-Maschine-Einrichtung integriert ist, wobei das Sicherheitselement (4) eine Schnittstelle (41) umfasst zum Einrichten:
- eines ersten logischen Kommunikationskanals (43a) zum Senden und Empfangen von Sicherheitselementnachrichten (5), welche einer Modemeinheit (7) einer Maschine-zu-Maschine-Einrichtung gelten, und
- eines zweiten logischen Kommunikationskanals (43b) zum Senden und Empfangen von Sicherheitselementnachrichten (5), welche der Steuergerätenetzeinrichtung (1) gelten.

7. Verfahren gemäß einem der vorangegangenen Ansprüche, wobei die Sicherheitselementnachricht (5) eine Applikationsprotokolldateneinheit (APDO) ist und wobei die Steuergerätenetznachricht (3) mittels eines Umschlagbefehls konvertiert (11) wird.

8. Verfahren gemäß einem der vorangegangenen Ansprüche, wobei der Registrierungsstatus der Steuergerätenetznachricht (3) schaltbar ist von einem nicht registrierten Status zu einem registrierten Status.

9. Verfahren gemäß einem der vorangegangenen Ansprüche, wobei die Sicherheitselementnachricht (5) in dem Sicherheitselement (4) aufgenommen wird.

10. Sicherheitselement (4) umfassend:
- eine Schnittstelle (41) eingerichtet zum Senden und/oder Empfangen (10) einer Sicherheitselementnachricht (5); und
- ein Verarbeitungsmodul (µP) eingerichtet zum Verarbeiten (14) der Sicherheitselementnachricht (5);
**gekennzeichnet dadurch, dass**
diese Sicherheitselementnachricht (5) von einer Steuergerätenetznachricht (3) konvertiert wird, welche von der zu überwachenden Steuergerätenetzeinrichtung (1) empfangen wird und welche über den Steuergerätenetzbus (2) übermittelt wird;
das Sicherheitselement (4) umfasst ferner ein Registrationsmodul (46) eingerichtet zum:
- Registrieren (15) einer Steuergerätenetznachricht (3) als eine registrierte Steuergerätenetznachricht zum Überwachen einer Steuergerätenetzeinrichtung (1); und
- Bereitstellen der registrierten Steuergerätenetznachricht an die Steuergerätenetzeinrichtung (1) mittels eines Steuergerätenetzes (2), wobei der Registrierungsstatus zum Herausfiltern von registrierten Steuergerätenetznachrichten aus nicht registrierten Steuergerätenetznachrichten verwendet wird.

11. Sicherheitselement gemäß Anspruch 10, weiter umfassend eine Brückeneinheit (6) zum Konvertieren der Sicherheitselementnachricht (5) in der Steuergerätenetznachricht (3), wobei die Steuergerätenetznachricht (3) mittels der Schnittstelle (41) gesendet und/oder empfangen (10) wird.

12. Sicherheitselement gemäß Anspruch 10 oder 11, wobei das Registrierungsmodul (46) als ein Sicherheitselementapplet (45) realisiert ist, wobei das Applet (45) vorzugsweise mittels Luftkommandos OTA durch einen OTA Server (9) konfigurierbar und aktualisierbar ist.

13. Sicherheitselement gemäß einem der Ansprüche 10 bis 12, wobei das Sicherheitselement (4) ferner eine Datenspeichereinheit (44) umfasst, welche zum Aufnehmen der Sicherheitselementnachrichten (5), welche von einer Steuergerätenetzeinrichtung (1) stammen, konfiguriert ist.

14. Sicherheitselement gemäß einem der Ansprüche 10 bis 13, wobei die Schnittstelle (41) konfiguriert ist zum:
- eines ersten logischen Kommunikationskanals (43a) eingerichtet zum Senden und Empfangen von Sicherheitselementnachrichten (5), welche an eine Modemeinheit (7) einer Maschine-zu-Maschine-Einrichtung auf einem ersten physikalischen Kommunikationskanal (42a) gerichtet sind; und
- eines zweiten logischen Kommunikationskanals (43b) eingerichtet zum Senden und Empfangen von Sicherheitselementnachrichten (5), welche an ein Steuergerätenetz (2) auf dem ersten physikalischen Kommunikationskanal (42a) oder dem zweiten physikalischen Kommunikationskanal (42b) gerichtet sind.

15. Steuergerätenetzsystem aufwelsend:
- mindestens eine Steuergerätenetzeinrichtung (1) eingerichtet zum Senden und/oder Empfangen (10) einer Steuergerätenetznachricht (3);
- einer Brückeneinheit (6) eingerichtet zum Konvertieren (11) der Steuergerätenetznachricht (3) in eine Sicherheitselementnachricht (5); und
- ein Sicherheitselement (4) eingerichtet zum Empfangen (12) der Sicherheitselementnachricht (5); **dadurch gekennzeichnet, dass**
- die Steuergerätenetznachricht (3) von einer Steuergerätenetzeinrichtung (1), welche überwacht wird, empfangen wird und über einen Steuergerätenetzbus (2) übermittelt wird; und
- das Sicherheitselement (4) umfasst eine Registrierungsstatusdatenbank (8) mit Einträgen von registrierten Steuergerätenetznachrichten, wobei die empfangene Steuergerätenetznachricht (3) mittels Verifikation, gefiltert (13) wird, ob ein geeigneter Eintrag in der Registrationsstatusdatenbank (8) vorhanden ist und in die Sicherheitselementnachricht (5) konvertiert und an das Sicherheitselement (4) bereitgestellt wird, falls ein geeigneter Eintrag in der Registrationsstatusdatenbank (8) vorhanden ist.

## Revendications

1. Procédé destiné à surveiller des dispositifs de réseau CAN (Controller Area Controller) (1), le procédé comprenant les étapes suivantes :
- recevoir (10) un message de réseau CAN (3) ;
- convertir (11) ledit message de réseau CAN (3) en un message d'élément sécurisé (5), et
- fournir (12) ledit message d'élément sécurisé (5) à un élément sécurisé (4) ;
**caractérisé en ce que**;
- ledit message de réseau CAN (3) est reçu d'un dispositif de réseau CAN (1) à surveiller et est transmis via un bus de réseau CAN (2), et
- ledit message de réseau CAN (3) est filtré (13) en fonction d'un état d'enregistrement dudit message de réseau CAN (3).

2. Procédé selon la revendication 1, dans lequel :
- ledit message de réseau CAN (3) comprend un état parmi un état enregistré et un état non enregistré comme ledit état d'enregistrement, et
- ledit message de réseau CAN est traité (14) dans ledit élément sécurisé (4) pour surveiller lesdits dispositifs de réseau CAN (1).

3. Procédé selon la revendication 1 ou 2, dans lequel ledit état d'enregistrement est fourni par ledit élément sécurisé (4), et dans lequel ledit message de réseau CAN enregistré contient un événement prédéfini définissant une caractéristique dudit dispositif de réseau CAN (1) et observé par ledit élément sécurisé (4).

4. Procédé selon l'une quelconque des revendications précédentes, dans lequel un second message d'élément sécurisé est généré par ledit élément sécurisé (4), dans lequel le second message d'élément sécurisé est converti en un second message de réseau CAN et envoyé (10) via le réseau CAN (2) à un dispositif de réseau CAN (1) dédié.

5. Procédé selon la revendication 4, dans lequel le second message d'élément sécurisé est un message de réponse audit message d'élément sécurisé (5) et/ou un message de commande proactive généré par l'élément sécurisé (4) pour surveiller ledit dispositif de réseau CAN (1).

6. Procédé selon l'une quelconque des revendications précédentes, dans lequel ledit élément sécurisé (4) est intégré dans un dispositif intermachines, dans lequel ledit élément sécurisé (4) comprend une interface (41) pour établir :
- une première voie de communication logique (43a) pour envoyer et recevoir des messages d'élément sécurisé (5) dédiés vers une unité de modem (7) d'un dispositif intermachines, et
- une seconde voie de communication logique (43b) pour envoyer et recevoir des messages d'élément sécurisé (5) dédiés vers les dispositifs de réseau CAN (1).

7. Procédé selon l'une quelconque des revendications précédentes, dans lequel ledit message d'élément sécurisé (5) est une unité de données de protocole d'application (APDU), et dans lequel le message de réseau CAN (3) est converti (11) en une commande d'enveloppe.

8. Procédé selon l'une quelconque des revendications précédentes, dans lequel ledit état d'enregistrement dudit message de réseau CAN (3) peut être commuté d'un état non enregistré à un état enregistré.

9. Procédé selon l'une quelconque des revendications précédentes, dans lequel ledit message d'élément sécurisé (5) est consigné dans ledit élément sécurisé (4).

10. Elément sécurisé (4) comprenant :
- une interface (41) configurée pour envoyer et/ou recevoir (10) un message d'élément sécurisé (5), et
- un module de traitement (µP) configuré pour traiter (14) ledit message d'élément sécurisé (5) ;
**caractérisé en ce que**
ledit message d'élément sécurisé (5) est converti à partir d'un message de réseau CAN (3) reçu d'un dispositif de message de réseau CAN (1) à surveiller et est transmis via un bus de réseau CAN (2) ;
l'élément sécurisé (4) comprend en outre un module d'enregistrement (46) configuré pour :
- enregistrer (15) un message de réseau CAN (3) comme message de réseau CAN enregistré pour surveiller un dispositif de réseau CAN (1), et
- fournir le message de réseau CAN enregistré au dispositif de réseau CAN (1) via un réseau CAN (2), dans lequel l'état d'enregistrement est utilisé pour filtrer des messages de réseau CAN enregistrés parmi des messages de réseau CAN non enregistrés.

11. Elément sécurisé selon la revendication 10, comprenant en outre une unité de pontage (6) pour convertir ledit message d'élément sécurisé (5) en message de réseau CAN (3), dans lequel ledit message de réseau (3) est envoyé et/ou reçu (10) via ladite interface (41).

12. Elément sécurisé selon la revendication 10 ou 11, dans lequel le module d'enregistrement (46) est réalisé sous une forme d'applet d'élément sécurisé (45), dans lequel l'applet (45) peut de préférence être configuré et mis à jour par des commandes de liaison radio, OTA, par un serveur OTA (9).

13. Elément sécurisé selon l'une quelconque des revendication 10 à 12, dans lequel l'élément sécurisé (4) comprend en outre une unité de stockage de données (44) configurée pour consigner lesdits messages d'élément sécurisé (5) provenant d'un dispositif de réseau CAN (1).

14. Elément sécurisé selon l'une quelconque des revendications 10 à 13, dans lequel l'interface (41) est configurée pour établir :
- une première voie de communication logique (43a) configurée pour envoyer et recevoir des messages d'élément sécurisé (5) dédiés vers une unité de modem (7) d'un dispositif intermachines sur une première voie de communication physique (42a), et
- une seconde voie de communication logique (43b) configurée pour envoyer et recevoir des messages d'élément sécurisé (5) dédiés vers un réseau CAN (2) sur la première voie de communication physique (42a) ou une seconde voie de communication physique (42b).

15. Système de réseau CAN, comprenant :
- au moins un dispositif de réseau CAN (1) configuré pour envoyer et/ou recevoir (10) un message de réseau CAN (3) ;
- une unité de pontage (6) configurée pour convertir (11) ledit message de réseau CAN (3) en un message d'élément sécurisé (5), et
- un élément sécurisé (4) configuré pour recevoir (12) ledit message d'élément sécurisé (5) ;
**caractérisé en ce que**
ledit message de réseau (3) est reçu d'un dispositif de réseau CAN (1) à surveiller et est transmis via un bus de réseau CAN (2), et
- ledit élément sécurisé (4) comprend une base de données d'état d'enregistrement (8) présentant des entrées de messages de réseau CAN enregistrés, dans lequel le message de réseau (3) reçu est filtré (13) par vérification quant à si une entrée appropriée est contenue dans la base de données d'état d'enregistrement (8), et est converti en ledit message d'élément sécurisé (5) et fourni audit élément sécurisé (4) si une entrée appropriée est contenue dans la base de données d'état d'enregistrement (8).
